# EUROPEAN PATENT APPLICATION

(11) **EP 4 144 267 A1**
(43) Date of publication of application: **08.03.2023**
(21) Application number: 21797244.7
(22) Date of filing: 26.04.2021
(51) Int. Cl.: A47J 43/046

(54) **BASE OF FOOD PROCESSOR, AND FOOD PROCESSOR**

(30) Priority: 26.04.2020 CN 202020656523 U
(71) Applicant: Zhejiang Shaoxing Supor Domestic Electrical Appliance Co., Ltd., Shaoxing, Zhejiang 312017 (CN)
(72) Inventor: YANG, Baobin, Shaoxing, Zhejiang 312017 (CN)
(74) Representative: LLR
(86) International application number: PCT/CN2021/089751
(87) International publication number: WO 2021/218880

(57) **Abstract**

A base (11) of a food processor, and the food processor. The base (11) of a food processor comprises a base body (112), a plurality of load cells (114) and a plurality of footpads (116). The plurality of load cells (114) jointly bear the weight of the base body (112). The plurality of footpads (116) support the load cells (114) from below in a one-to-one correspondence way, and a bottom surface (A) of the base body (112) is higher than bottom surfaces (B) of the footpads (116). The load cells (114) do not need to switch between a weighing state and a non-weighing state, thereby simplifying weighing operations.

## Description

### Technical field

The present invention relates to the technical field of small electrical home appliances, and in particular, to a base of food processor and a food processor.

### Background of the Invention

When using a food processor to prepare food ingredients, the ratio of a food ingredient to water is critical. For example, when making dough, there is a higher requirement on the ratio of flour to water, which, if not well controlled, will make it difficult to obtain a good dough and directly affect cooking flavour. Some existing food processors are equipped with a weighing module. However, the weighing module needs to switch between a weighing state and a non-weighing state by means of a switching mechanism, can only perform weighing operations after switching to the weighing state, and needs to switch to the non-weighing state after completing weighing, which complicates weighing operations of the food processors.

### Summary of the Invention

The present invention provides an improved base of food processor and food processor capable of making weighing operations relatively simple.

A base of food processor comprises:
a base body;
a plurality of load cells, jointly bearing the weight of the base body; and
a plurality of footpads, supporting the load cells from below in a one-to-one correspondence way, with a bottom surface of the base body higher than bottom surfaces of the footpads.

Preferably, the base further comprises bottom caps, the bottom caps are connected with the base body, and the load cells are fixed to the base body by means of the bottom caps. The bottom caps maintain the load cells fixed relative to the base body, so that the base body is borne on the load cells stably.

Preferably, the base body comprises a cavity in which the load cells are arranged, edge portions of the load cells are fixed to the base body by means of the bottom caps, and the footpads support central portions of the load cells. By providing the cavity, the arrangement of the load cells and the footpads is facilitated.

Preferably, the bottom caps are located below the load cells and comprise pocket holes, the central portions comprise connecting seats protruding from the pocket holes, and the footpads support the connecting seats. The pocket holes can eliminate interference between the bottom caps and the connecting seats, and achieve the supporting of the load cells by the footpads.

Preferably, the bottom caps comprise annular bodies and fixing ribs extending from the annular bodies, the annular bodies are connected with the base body, the fixing ribs fix the edge portions, and the annular bodies comprise the pocket holes. The bottom caps are of a simple structure, which facilitates processing and manufacturing.

Preferably, the footpads comprise wedge-shaped snap-fit joints provided at their top, the wedge-shaped snap-fit joints protrude into the connecting seats and snap-fit and connect with the connecting seats; and/or
the footpads comprise suction cups provided at their bottom and used for attaching by sucking to a surface of a worktop.

The wedge-shaped snap-fit joints maintain the footpads fixed relative to the load cells, and thus fixed relative to the base body. The suction cups are used for attaching by sucking to the surface of the worktop. Under the effect of a pressure, air inside the suction cups is evacuated, and a vacuum is formed. Thanks to the tight adhesion with the surface of the worktop by the suction force, shifting of a food processor that occurs during use can be reduced.

Preferably, the bottom caps are detachably connected with the base body. This mode of connection facilitates replacement and maintenance of the load cells.

Preferably, there are four load cells arranged in two rows and two columns, wherein the two rows of load cells are symmetrically arranged with respect to a center line of the base body parallel to a row direction, and/or the two columns of load cells are symmetrically arranged with respect to a center line of the base body parallel to a column direction. The symmetrical arrangement of the load cells can make the weight shared by each load cell more even and balanced, which helps reduce weighing errors.

A food processor comprises:
the base according to any one of the above; and
a cup assembly detachably assembled with the base.

Preferably, the cup assembly comprises a mixing blade. The base body comprises an electrical motor and a reducer which are connected in a transmission way, the reducer comprises an output shaft connected with the mixing blade in a transmission way. The reducer can achieve speed reduction and torque augmentation of the mixing blade, and increase a mixing torque.

Preferably, the electrical motor is located at one side of the output shaft, the plurality of load cells are respectively arranged at both sides of the output shaft and are offset, with respect to the output shaft, towards the side close to the electrical motor. As the electrical motor is located at one side of the output shaft and is heavy, by arranging the plurality of load cells respectively at both sides of the output shaft and offsetting them with respect to the output shaft towards the side close to the electrical motor, the weight of the base body including that of the electrical motor can be evenly loaded on each of the load cells.

The technical solutions provided by the present invention can achieve at least the following advantageous effects:
the present invention provides a base of food processor and a food processor, wherein, the footpads support the load cells from below, and the load cells bear the weight of the base body on their top. On one hand, the load cells can weigh a food ingredient and water put inside the food processor, the respective weights of the food ingredient and water can be obtained by the load cells, so that the ratio of the food ingredient to water can be adjusted properly; on the other hand, the load cells are always in a bearing state and there is no need to switch between a weighing state and a non-weighing state, thus simplifying weighing operations.

### Brief Description of the Drawings

Fig. 1 is a schematic view of a food processor illustrated in an exemplary embodiment of the present invention;
Fig. 2 is a sectional view of a food processor illustrated in an exemplary embodiment of the present invention;
Fig. 3 is an enlarged view of the part A in Fig. 2;
Fig. 4 is a schematic view of a load cell illustrated in Fig. 2;
Fig. 5 is a schematic view of a bottom cap shown in Fig. 2;
Fig. 6 is a partial sectional view of the food processor illustrated in Fig. 1;
Fig. 7 is an enlarged view of the part B in Fig. 6;
Fig. 8 is an exploded view of the food processor illustrated in Fig. 1;
Fig. 9 is an exploded view of the base of food processor illustrated in Fig. 1;
Fig. 10 is an enlarged view of the part C in Fig. 2.

### Embodiments of the Invention

Exemplary embodiments will be described in detail herein, examples of which are illustrated in the accompanying drawings. When the following description refers to the drawings, the same reference signs in different drawings indicate the same or similar elements, unless otherwise indicated. The modes of realization described in the exemplary embodiments below do not represent all modes of realization complying with the present invention. Rather, they are merely examples of appliances and methods complying with some aspects of the present invention as recited in the appended claims.

The terminology used in the present invention is for the purpose of describing particular embodiments only and is not intended to limit the present invention. Unless otherwise defined, technical or scientific terms used in the present invention shall have the ordinary meanings as understood by those of ordinary skills in the art to which the present invention belongs. The terms "first", "second" and the like used in the description and the claims of the present invention do not denote any order, quantity or importance, but are only used to distinguish different components. Likewise, "a" or "an" and the like do not denote a quantitative limitation, but rather denote the presence of at least one. If it means only one, it will be specifically indicated. "A plurality of" or "several" means two or more. Unless otherwise indicated, the terms "front", "barear", "lower" and/or "upper", "top", "bottom" and the like are for convenience of description only and are not limited to one position or one spatial orientation. Words like "include" or "comprise" and so on mean that the element or item appearing before "include or "comprise" covers the elements or items listed after "include" or "comprise" and their equivalents, and do not exclude other elements or items. Words like "connect" or "connection" and so on are not limited to physical or mechanical connections, but may include electrical connections, whether direct or indirect.

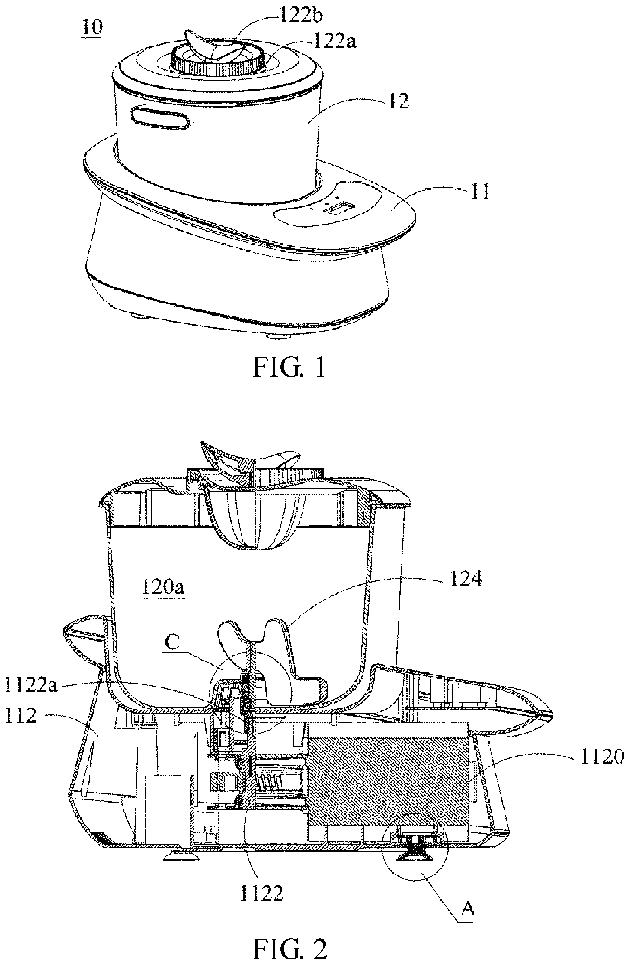

Reference is now made to Fig. 1, which shows a schematic view of a food processor illustrated by an exemplary embodiment of the present invention.

The food processor 10 provided by the embodiment of the present invention comprises a base 11 and a cup assembly 12 detachably assembled with the base 11. The food processor 10 includes, but is not limited to, a high speed blender and a dough mixer. The cup assembly 12 comprises a cup body 120 and a cup cover 122 capable of covering the cup body 120 in a screwing way among other ways. In the embodiment shown in Fig. 1, the cup cover 122 further comprises a putting-food opening 122a and a putting-food cover 122b covering the putting-food opening 122a.

Reference is now made to Fig. 2, which shows a sectional view of the base of the food processor shown in Fig. 1.

The base 11 comprises a base body 112 comprising an electrical motor 1120. The cup assembly 12 comprises a mixing blade 124. The electrical motor 1120 drives the mixing blade 124 to rotate. The cup body 120 comprises a mixing chamber 120a in which the mixing blade 124 is mounted. In an embodiment, an output shaft of the electrical motor 1120 extends in a vertical direction and is connected with the mixing blade 124 in a transmission way. In the embodiment shown in Fig. 2, the base body 112 further comprises a reducer 1122 connected with the electrical motor 1120 in a transmission way. The reducer 1122 comprises an output shaft 1122a connected with the mixing blade 124 in a transmission way. The reducer 1122 is capable of achieving speed reduction and torque augmentation of the mixing blade 124. The reducer 1122 includes, but is not limited to, a worm gear reducer.

The base body 112 further comprises a control circuit (not shown in Fig. 2) electrically connected with the electrical motor 1120 and capable of controlling the motor speed of the electrical motor. The base body 112 can further comprises a heating assembly, the control circuit is electrically connected with the heating assembly and controls the heating assembly to heat and so on.

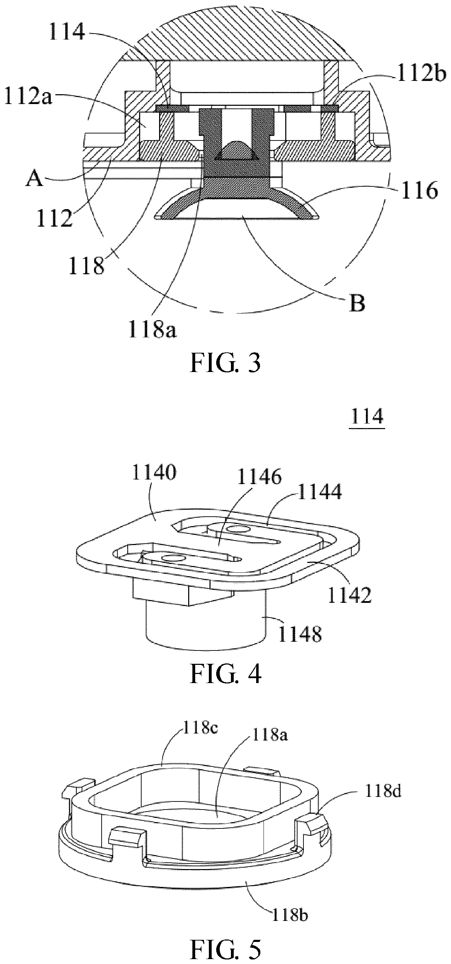

Reference is now made to Fig. 3, which shows an enlarged view of the part A in Fig. 2.

The base body 11 further comprises load cells 114 and footpads 116. In this embodiment, the load cells 114 bear the weight of the base body 112, the footpads 116 support the load cells from below, the bottom surface A of the base body 112 is higher than the bottom surfaces B of the footpads 116, the base body 112 is in a hang-in-the-air state, and the weight of the base body 112 can be loaded on the load cells 114. Thus, it can be seen that thanks to the load cells 114, a food ingredient and water put into the mixing chamber 120a can be weighed respectively so as to weigh an amount of the food ingredient and water in an appropriate ratio of the food ingredient to water. Food prepared based on this ratio will have a better flavor. The method of weighing can be set by a program. In addition, it can be seen from the above description that the load cells 114 are always in a bearing state and there is no need to switch between a weighing state and a non-weighing state, thus simplifying the process of weighing operations.

Reference is now made to Fig. 4, which shows a schematic view of a load cell 114 shown in Fig. 3.

In an embodiment, the load cells 114 comprise weighing plates 1140 and sensing elements (not shown) connected below the weighing plates 1140 and arranged inside the connecting seats 1148. The base body 112 is borne at edge portions 1142 of the weighing plate 1140, and the edge portions 1142 are partially separated from central portions 1146 by gaps 1144. The footpads 116 support at the central portions 1146. The edge portions 1142 of the weighing plates 1140 can deform under the gravity of the base body 112 relative to the edge portions 1142. The sensing elements are capable of sensing the deformation of the weighing plates 1140 and generating an electrical signal.

Reference is again made to Fig. 3. The edge portions 1142 of the load cells 114 can be fixedly connected with the base body 112 to make the load cells 114 fixed relative to the base body 112, and there is no limitation for the mode of fixation. In this embodiment, the base 11 comprises bottom caps 118 connected with the base body 112, and the load cells 114 are fixed to the base body 112 by means of the bottom caps 118. In an embodiment, the bottom caps 118 are arranged below the load cells 114, the load cells 114 are fixed by being sandwiched between the bottom caps 118 and the base body 112. In an embodiment, the bottom caps 118 can be detachably connected with the base body 112, so as to facilitate replacement and maintenance of the load cells 114.

The base body 112 comprises a cavity 112a in which the load cells 114 are arranged. Thus, the arrangement of the load cells 114 and the footpads 116 can be facilitated. The cavity 112a is a cavity with a stepped structure. The edge portions 1142 of the load cells 114 are fixed between a stepper face 112b inside the cavity 112a and the bottom caps 118. Leave vacant above the central portions 1146. The footpads 116 support the central portions 1146 of the load cells 114 from below. In this way, the weight of the base body 112 is loaded at the edge portions 1142 of the load cells 114, the edge portions 1142 are capable of deforming relative to the central portions 1146, so that the sensing elements generate an electrical signal and output it to the control circuit. According to the electrical signal, the control circuit controls a display circuit to display the weight of the base body 112. In an embodiment, at the stepped face 112b, the shape of the cavity 112a can be the same as the appearance of the weighing plates 1140, the outer contour face of the weighing plates 1140 is in clearance fit with the inner wall of the cavity 112a, and the depth by which the stepped face 112b retreats concavely can be the same as the thickness of the weighing plates 1140.

The cavity 112a is provided at a bottom face of the base body 112. The bottom caps 118 block the openings of the cavity 112a and mask the weighing plates 1400 inside the cavity 112a. The bottom caps 118 comprise pocket holes 118a through which connecting seats 1148 protrude. The footpads 116 support the connecting seats 1148 from below. The pocket holes 118a can eliminate interference between the bottom caps 118 and the connecting seats 1148, and achieve the supporting of the load cells 114 by the footpads 116.

Reference is now made to Fig. 5, which shows a schematic view of a bottom cap 118 in Fig. 3.

The specific structure of the bottom caps 118 is not defined by the present invention. In the embodiment, the bottom caps 118 comprise annular bodies 118b and fixing ribs 118c extending from the annular bodies 118b. The annular bodies 118b are connected with the base body 112. The fixing ribs 118c fix the load cells 114, and the load cells 114 are fixed by being sandwiched between the fixing ribs 118c and the base body 112. The annular bodies 118b comprise the pocket holes 118a, which are located at a hollow part of the annular bodies 118b. Such bottom caps 118 are of a simple structure, which facilitates processing and manufacturing.

In an embodiment, the bottom caps 118 are connected with the base body 112 in a snap-fit way. Specifically, the annular bodies 118b comprise a plurality of snap-fit hooks 118d, which are distributed on the annual bodies 118b in a spaced apart way and are respectively connected with the base body 112 in a snap-fit way. The bottom caps 118 can be formed integrally by injection molding.

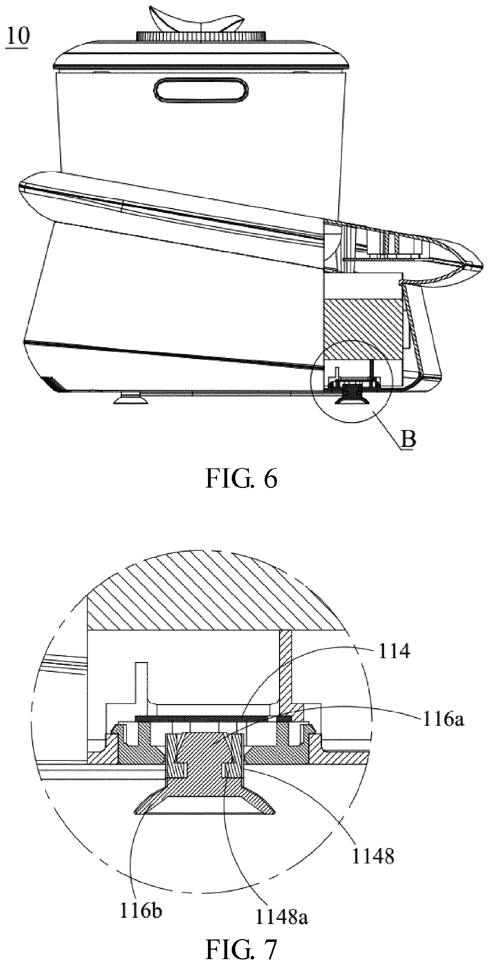

Reference is now made to Fig. 6 and Fig. 7, in which Fig. 6 shows a partial sectional view of the food processor in Fig. 1, and Fig. 7 shows an enlarged view of the part B in Fig. 6.

The footpads 116 comprise wedge-shaped snap-fit joints 116a provided at their top. The wedge-shaped snap-fit joints 116a snap-fit and connect with the connecting seats 1148 of the load cells 114. Specifically, protruding rings 1148a are provided inside the connecting seats 1148, and snap fit and connect with bigger ends of the wedge-shaped snap-fit joints 116a. By means of this structure, the footpads 16 are maintained fixed relative to the load cells 114 and thus maintained fixed relative to the base body 112. Of course, in some other embodiments, the mode of fixing the footpads 116 to the load cells 114 is not limited thereto. For example, the footpads 116 can also be fixed to the connecting seats 1148 by adhesion.

The footpads 116 further comprise suction cups 116b provided at their bottom and having a suction function so that the footpads 116 form suction footpads. When the footpads 116 are pressed, air inside the suction cups 116b is evacuated and a vacuum is formed. The suction cups 116b are used for attaching by sucking to the surface of a worktop. Thanks to the combination of the suction footpads 116 supporting the load cells 114, not only shifting of the food processor 10 caused by vibrations of the electrical motor 1120 is reduced, but also a rigid impact exerted on the load cells 114 can be converted into a soft impact by means of the footpads 116, preventing the load cells 114 from permanent deformation under the effect of pressure, which affects weighing accuracy.

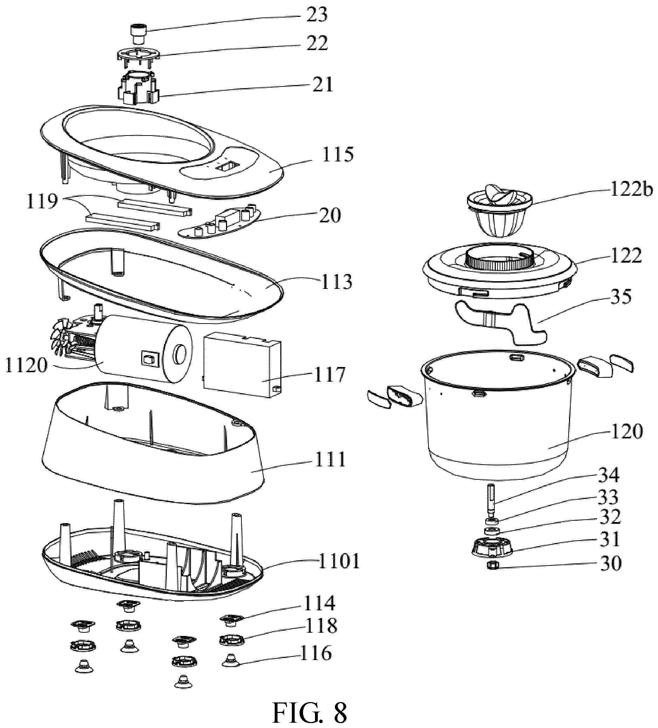

Reference is now made to Fig. 8, which shows an exploded view of the food processor shown in Fig. 1.

A plurality of load cells 114 can be provided. A plurality of load cells 114 can jointly bear the weight of the base body 112. Correspondingly, a plurality of footpads 116 are provided, and support each of the load cells 114 from below in a one-to-one correspondence way. As the load cells 114 are always in a bearing state, the plurality of load cells 114 can together share a loaded weight, and the sum of loads borne by the plurality of load cells 114 is the total weight borne. During weighing, each load cell 114 shares only a part of the weight, so that creep of the load cells 114 can be reduced or even avoided. The weight of the load cells 114 can be selected according to the weight borne. By using a plurality of load cells 114, as each load cell 114 shares only a part of the weight, load cells 114 with a relatively small measuring range can be selected.

In the embodiment shown in Fig. 8, four load cells 114 are provided, the specific positioning of which is not limited. For example, one can be arranged respectively at both ends of the base body 112, and two arranged in a middle position. In the present embodiment, the four load cells 114 are arranged in two rows and two columns, and the four load cells 114 are arranged respectively at the position of the four corners of the bottom of the base body 112.

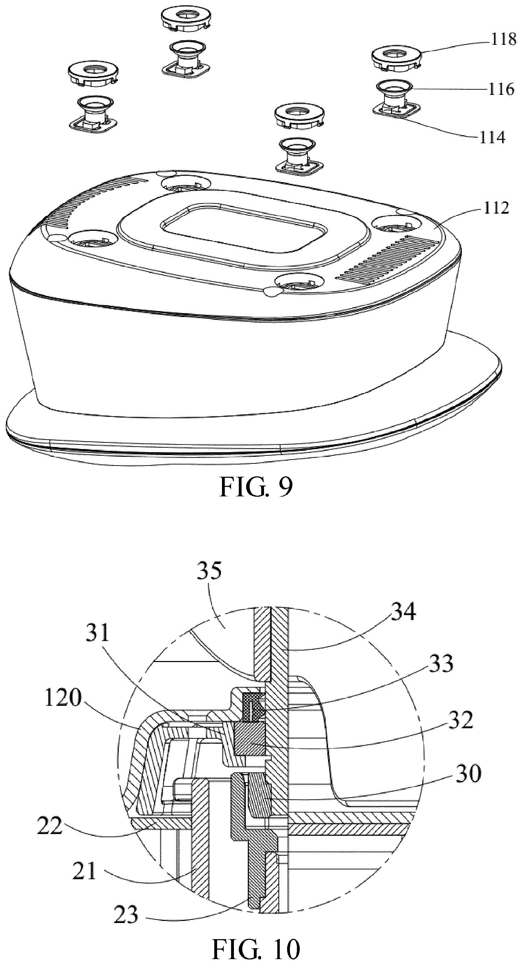

Reference is now made to Fig. 9, which shows a schematic view in which four load cells 114 are distributed at the base body 112.

The base body 112 comprises four cavities 112a, and the four load cells 114 are arranged in a one-to-one correspondence way inside the four cavities 112a and are fixed to the base body 112 respectively by means of four bottom caps 118.

The four load cells 114 are arranged in two rows and two columns. In an embodiment, the two rows of load cells 114 are arranged symmetrically with respect to a center line of the base body 112 parallel to the row direction (the X direction in Fig. 9), and/or, the two columns of load cells 114 are arranged symmetrically with respect to a center line of the base body 112 parallel to the column direction (the Y direction in Fig. 9). The symmetrical arrangement of the load cells 114 can make the weight shared by each load cell 114 more even and balanced, which helps reduce weighing errors.

It should be noted that depending on different structures of the base body 112, there are different modes of symmetry of the load cells 114.

In reference to Fig. 2, the electrical motor 1120 is located at one side of the output shaft 1122a and is heavy. In order to make the weight of the base body 112 including that of the electrical motor 1120 evenly loaded on each of the load cells 114, in an embodiment, a plurality of load cells 114 are provided, which are located respectively at both sides of the output shaft 1122a and are offset, relative to the output shaft 1122a, towards the side of the output shaft 1122a close to the electrical motor 1120, so that each of the load cells 114 can be evenly pressed.

In a specific embodiment in which the four load cells 114 are arranged in two rows and two columns, it is possible to have one column of load cells 114 arranged at the right side of the output shaft 1122a, which side close to the electrical motor 1120, while another column of load cells 114 arranged at the left side of the output shaft 1122a, which side away from the electrical motor 1120. In order for each of the load cells 114 to be pressed evenly, the middle point of the distance between the two columns of load cells 114 is offset, relative to the output shaft 1122a, towards the side where the electrical motor 1120 is located, so that the two columns of load cells 114 can evenly bear the weight.

Reference is again made to Fig. 8. In an embodiment, the base body 112 comprises a bottom shell 1101, a lower body 111, an upper body 113 and an upper shell 115, which together form an outer shell of the base body 112, inside which the electrical motor 1120 and the control circuit are fixed. The base body 112 can further comprise a power box 117 and a heating assembly 119. A power board, the control circuit and so on can be arranged inside the power box 117. The heating assembly 119 can heat the cup assembly 120, which can be used for fermentation and dough fermentation for example.

The base body 112 further comprises a display circuit 20. The control circuit is electrically connected with the load cells 114 and the display circuit 20 respectively. The weight loaded on the load cells 114 is displayed according to an electrical signal input by the load cells 114. During the process of weighing, the weight of the food processor itself can be subtracted by programming, and only the weight of the food ingredient and water added into the cup assembly 10 is displayed. The display circuit 20 comprises a display element which includes, but is not limited to, nixie tube. The display circuit 20 can be arranged at the upper shell 115. The upper shell 115 is provided with a display area by means of which the weight of the food ingredient and water displayed by the display element can be observed.

The base body 112 can comprise a button electrically connected with the control circuit so as to control the resetting of the display circuit 20 in response to a reset signal input from the button.

In an embodiment, the base body 112 further comprises a lower lock catch 21, a decorative element 22 and a lower connector 23. The mixing blade 124 comprises an upper connector 30, an upper lock catch 31, a bearing 32, an oil seal 33, a blade shaft 34, and a blade 35.

Reference is now made to Fig. 10, which shows an enlarged view of the part C in Fig. 2.

The lower connector 23 is fixedly connected with the output shaft 1122a of the reducer 1122, the lower lock catch 21 is fixedly connected with the outer top of the upper shell 115, and the decorative element 22 is connected with the lower lock catch 21. The upper lock catch 31 is fixedly connected with the outer bottom of the cup assembly 120 and is positioned by being circumferentially fitted to the lower lock catch 21. The upper connector 30 is fixedly connected with the blade shaft 34. The bearing 32 and the oil seal 33 are mounted in the space enclosed by the upper lock catch 31 and the cup assembly 120, and the outer periphery of the bearing 32 is interference fitted to the upper lock catch 31, while the inner periphery is interference fitted to the blade shaft 34. The oil seal 33 is sleeved to the blade shaft 34 to seal the lubricant inside the bearing 32 to prevent leaking. The blade 35 is mounted to the blade shaft 34 and rotates with the blade shaft 34. The blade 35 is located inside the mixing chamber 120a.

What have been described above are only preferred embodiments of the present invention, and are not intended to limit the present invention. Any modifications, equivalent replacements, improvements and so on made within the spirit and principles of the present invention shall fall within the protection scope of the present invention.

## Claims

1. A base of food processor, **characterized in that** the base (11) comprises:
a base body (112);
a plurality of load cells (114), jointly bearing the weight of the base body (112); and
a plurality of footpads (116), supporting the load cells (114) from below in a one-to-one correspondence way, with a bottom surface of the base body (112) higher than bottom surfaces of the footpads (116).

2. The base of food processor according to claim 1, **characterized in that**, the base (11) further comprises bottom caps (118), the bottom caps (118) are connected with the base body (112), and the load cells (114) are fixed to the base body (112) by means of the bottom caps (118).

3. The base of food processor according to claim 2, **characterized in that**, the base body (112) comprises a cavity (112a), the load cells (114) are arranged in the cavity (112a), edge portions (1142) of the load cells (114) are fixed to the base body (112) by means of the bottom caps (118), and the footpads (116) support central portions (1146) of the load cells (114).

4. The base of food processor according to claim 3, **characterized in that**, the bottom caps (118) are located below the load cells (114) and comprise pocket holes (118a), the central portions (1146) comprise connecting seats (1148), the connecting seats (1148) protrude from the pocket holes (118a), and the footpads (116) support the connecting seats (1148).

5. The base of food processor according to claim 4, **characterized in that**, the bottom caps (118) comprise annular bodies (118b) and fixing ribs (118c) extending from the annular bodies (118b), the annular bodies (118b) are connected with the base body (112), the fixing ribs (118c) fix the edge portions (1142), and the annular bodies (118b) comprise the pocket holes (118a).

6. The base of food processor according to claim 4, **characterized in that** the footpads (116) comprise wedge-shaped snap-fit joints (116a) provided at their top, the wedge-shaped snap-fit joints (116a) protrude into the connecting seats (1148) and snap-fit and connect with the connecting seats (1148); and/or
**in that** the footpads (116) comprise suction cups (116b) provided at their bottom, the suction cups (116b) are used for attaching by sucking to a surface of a worktop; and/or
**in that** the bottom caps (118) are detachably connected with the base body (112).

7. The base of food processor according to any one of claims 1 to 6, **characterized in that**, there are four load cells (114) and the four load cells (114) are arranged in two rows and two columns, wherein the two rows of load cells (114) are symmetrically arranged with respect to a center line of the base body (112) parallel to a row direction, and/or the two columns of load cells (114) are symmetrically arranged with respect to a center line of the base body (112) parallel to a column direction.

8. A food processor, **characterized in that** the food processor comprises:
the base (11) according to any one of claims 1 to 7; and
a cup assembly (12), the cup assembly (12) being detachably assembled with the base (11).

9. The food processor according to claim 8, **characterized in that**, the cup assembly comprises a mixing blade (124), the base body (112) comprises an electrical motor (1120) and a reducer (1122) which are connected in a transmission way, and the reducer (1122) comprises an output shaft (1122a) connecting with the mixing blade (124) in a transmission way.

10. The food processor according to claim 9, **characterized in that**, the electrical motor (1120) is located at one side of the output shaft (1122a), and the plurality of load cells (114) are respectively arranged at both sides of the output shaft (1122a) and are offset, with respect to the output shaft (1122a), towards the side close to the electrical motor (1120).
